# EUROPEAN PATENT SPECIFICATION

(11) **EP 3 805 886 B1**
(45) Date of publication and mention of the grant of the patent: **22.11.2023**
(21) Application number: 19904261.5
(22) Date of filing: 30.12.2019
(51) Int. Cl.: G05B 23/02, H04L 12/40

(54) **DATA TRANSMISSION METHOD IN VEHICLE COMMUNICATION INTERFACE APPARATUS, AND VEHICLE COMMUNICATION INTERFACE APPARATUS**
DATENÜBERTRAGUNGSVERFAHREN IN EINEM FAHRZEUGKOMMUNIKATIONSSCHNITTSTELLENGERÄT UND FAHRZEUGKOMMUNIKATIONSSCHNITTSTELLENGERÄT
PROCÉDÉ DE TRANSMISSION DE DONNÉES DANS UN APPAREIL D'INTERFACE DE COMMUNICATION DE VÉHICULE, ET APPAREIL D'INTERFACE DE COMMUNICATION DE VÉHICULE

(30) Priority: 29.12.2018 CN 201811639171
(43) Date of publication of application: 14.04.2021
(73) Proprietor: AUTEL INTELLIGENT TECHNOLOGY CORP., LTD., Shenzhen, Guangdong 518055 (CN)
(72) Inventor: JIANG, Yun, Shenzhen, Guangdong 518055 (CN)
(74) Representative: Gulde & Partner
(86) International application number: PCT/CN2019/129877
(87) International publication number: WO 2020/135865

(56) References cited:
- CN-A- 106 959 682
- CN-A- 106 993 056
- CN-A- 107 562 669
- CN-A- 108 445 868
- CN-A- 109 639 597
- US-A1- 2004 064 598
- US-A1- 2016 330 284

## Description

### BACKGROUND

### Technical Field

The present application relates to the field of vehicle diagnosis technologies, and especially, to a data transmission method in a vehicle communication interface apparatus and a vehicle communication interface apparatus.

### Related Art

With the improvement of living standards, transportations such as vehicles, metro trains, and high-speed trains have become necessary means of people for outgoing. Recently, rapid development of the electronics industry enables current transportations to provide a safer and more comfortable service for people.

For ensuring driving safety of a vehicle, a diagnosis needs to be performed on the vehicle regularly, to check performance of the vehicle. A traditional vehicle diagnosis system generally includes a host computer and a slave computer. The host computer is connected to the slave computer, and the slave computer is connected to a vehicle bus. The host computer can send a diagnostic command to the slave computer, and the slave computer transmits the diagnostic command to the vehicle bus. The slave computer may further receive diagnostic data in the vehicle bus and transmit the diagnostic data to the host computer.

In related art, US20160330284A1 discloses a system and method for server based processing of on board diagnostics (OBD) data, the method includes receiving data indicative of an asset identifier associated with a mechanical asset coupled to a communication device. The communication device is configured to retrieve data from a monitoring device of the mechanical asset. The method further includes receiving data indicative of a device type of the communication device, determining characteristics of an asset type based on the asset identifier data, and storing data indicative of the asset type, the determined characteristics, and the communication device type. Based on the determined characteristics and the communication device type, the method further includes determining a configuration for the communication device to retrieve the data from the monitoring device.

CN106993056A discloses a car data stream obtaining method and system and computer readable memory medium. The method includes the steps of receiving data stream selection instructions and packaging the data stream selection instructions into a first data packet; sending the data packet to a slave computer, analyzing the first data packet and then sending the first data packet to a car OBD interface through the slave computer, and obtaining reply data corresponding to the data stream selection instructions returned by the car OBD interface; and receiving a second data packet which is generated by packaging the reply data through the slave computer, analyzing the second data packet and obtaining data streams corresponding to the data stream selection instructions.

CN106959682A discloses a vehicle diagnosis method, apparatus and system. The diagnosis apparatus receives a plurality of diagnosis orders respectively sent by a plurality of diagnosis hosts, and stores the diagnosis orders to a data receive queue; the diagnosis apparatus extracts the plurality of diagnosis orders in sequence from the data receive queue, communicates and diagnoses the vehicle according to the diagnosis orders, obtains a plurality of diagnosis results in order, and stores the diagnosis results into a data transmit queue in sequence; the diagnosis apparatus respectively transmits the plurality of diagnosis results from the data transmit queue to the plurality of diagnosis hosts.

CN107562669A discloses a method, device and system for processing an NVMe protocol command in a terminal equipment. During processing of the NVMe protocol command, one NVMe protocol command corresponds to a command ID; one command ID corresponds to a cache area; a first controller sends an instruction needed to process the NVMe protocol command to a second controller by a first queue and a third queue; the second controller sends an instruction needed to process the NVMe protocol command to the first controller by a second queue and a fourth queue; and the first controller and the second controller acquire information needed to process the NVME protocol command from the cache area corresponding to the command ID according to the command ID.

It is found by the inventor in a process of implementing embodiments of the present invention that, a slave computer of a current vehicle diagnosis system cannot respond to a diagnostic command and receive diagnostic data simultaneously.

### SUMMARY

Based on the prior art, embodiments of the present invention provide a data transmission method in a vehicle communication interface apparatus and a vehicle communication interface apparatus which can respond to a diagnostic command and receive diagnostic data simultaneously.

The embodiments of the present invention provide technical solutions as follows:
A method according to the invention is defined in claim 1.

An apparatus according to the invention is defined in claim 5. The dependent claims define further advantageous embodiments.

Differing from the prior art, beneficial effects of the embodiments of the present invention lie in that, according to the data transmission method in the vehicle communication interface apparatus provided in the embodiments of the present invention, the first controller receives the diagnostic command sent by the host computer and stores the diagnostic command into the first queue, and the second controller obtains the diagnostic command from the first queue and sends the diagnostic command to the vehicle. The second controller further receives the diagnostic data from the vehicle and stores the diagnostic data into the second queue, and the first controller further obtains the diagnostic data from the second queue, thereby responding to the diagnostic command and receiving the diagnostic data simultaneously in the vehicle communication interface apparatus is implemented, to enable the vehicle communication interface apparatus to perform data communication with the host computer and the vehicle simultaneously.

### BRIEF DESCRIPTION OF THE DRAWINGS

For describing the technical solutions of the embodiments of the present invention more clearly, a brief introduction on accompanying drawings required in the embodiments of the present invention is made below. Obviously, the accompanying drawings described below are merely some embodiments of the present invention, and a person skilled in the art may obtain other accompanying drawings based on these accompanying drawings without creative efforts.
FIG. 1 is a schematic structural diagram of a vehicle diagnosis system according to an embodiment of the present invention;
FIG. 2 is a schematic structural diagram of a vehicle communication interface apparatus shown in FIG. 1 according to an embodiment of the present invention;
FIG. 3 is a schematic flowchart of a first data transmission method applied to the vehicle communication interface apparatus shown in FIG. 2 according to an embodiment of the present invention;
FIG. 4 is a schematic flowchart of a second data transmission method applied to the vehicle communication interface apparatus shown in FIG. 2 according to an embodiment of the present invention;
FIG. 5 is a schematic flowchart of a third data transmission method applied to the vehicle communication interface apparatus shown in FIG. 2 according to an embodiment of the present invention; and
FIG. 6 is a schematic flowchart of an application example of a data transmission method applied to the vehicle communication interface apparatus shown in FIG. 2 according to an embodiment of the present invention.

### DETAILED DESCRIPTION

To make objectives, the technical solutions, and advantages of the present invention clearer, the present invention is further described in detail with reference to accompanying drawings and embodiments.

Moreover, words such as "first" and "second" adopted in the present invention do not constitute any limitation on the data and the execution sequence, and merely distinguish same items or similar items of which the functions and roles are basically the same.

A traditional vehicle diagnosis system generally includes a host computer and a slave computer. The host computer is connected to the slave computer, and the slave computer is connected to a vehicle bus. The host computer can send a diagnostic command to the slave computer, and the slave computer transmits the diagnostic command to the vehicle bus. The slave computer may further receive diagnostic data in the vehicle bus and transmit the diagnostic data to the host computer. However, a slave computer of a current vehicle diagnosis system cannot respond to a diagnostic command and receive diagnostic data simultaneously.

Based on this, the embodiments of the present invention provide a data transmission method in a vehicle communication interface apparatus and a vehicle communication interface apparatus, and the data transmission method in the vehicle communication interface apparatus and the vehicle communication interface apparatus can respond to a diagnostic command and receive diagnostic data simultaneously.

The vehicle communication interface apparatus in the embodiments of the present invention may be connected to a host computer and a to-be-checked vehicle, to perform the data transmission method in the embodiments of the present invention.

The data transmission method in the embodiments of the present invention can be performed in any type of vehicle communication interface apparatus including a user interaction apparatus and a processor with a computing capability.

Specifically, the embodiments of the present invention are further described below with reference to accompanying drawings.

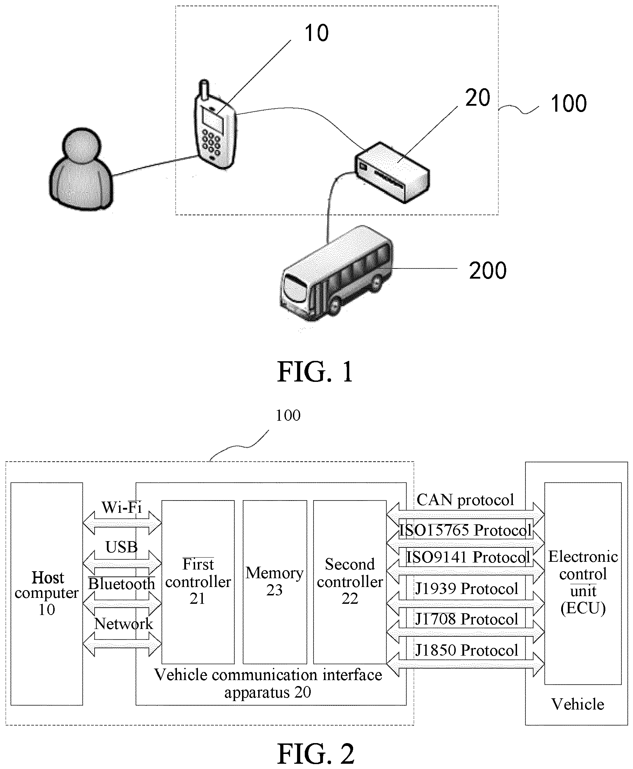

FIG. 1 is a schematic structural diagram of a vehicle diagnosis system according to an embodiment of the present invention. As shown in FIG. 1, the vehicle diagnosis system 100 includes a host computer 10 and a vehicle communication interface apparatus 20. The host computer 10 is connected to the vehicle communication interface apparatus 20, and the vehicle communication interface apparatus 20 is configured to connect to a vehicle 200.

The host computer 10 may be specifically any proper terminal device that is provided with a vehicle diagnosis function and on which an intelligent operating system is run, such as a mobile phone, a tablet computer, or an intelligent wearable device. A user (for example, a vehicle owner) may perform interaction with the host computer 10 by using one or more user interaction devices of any proper type (for example, a touchscreen, a mouse, a keyboard, a remote control, a motion sensing camera, and an audio capture apparatus), to input an instruction or control the host computer 10 to perform one or more operations. Client software of any type such as a vehicle diagnosis APP may be installed on the host computer 10. The host computer performs communication connection with the vehicle communication interface apparatus 20 through the client software, to send an instruction to the vehicle communication interface apparatus 20 or obtain data of the vehicle communication interface apparatus 20.

The vehicle communication interface apparatus 20 may be a communication interface apparatus of a vehicle communication interface (VCI) type or another type. The vehicle communication interface apparatus 20 may be connected to an electronic control unit (ECU) in the vehicle 200 through an on-board diagnostics (OBD) system, to obtain diagnostic data in the vehicle 200 or transmit an instruction to the vehicle 200. The vehicle 200 may be an automobile, a tram, a train, a truck, or the like, and performs data transmission with the host computer 10 through the corresponding vehicle communication interface apparatus. Specifically, the vehicle communication interface apparatus 20 is connected to a bus (for example, a CAN bus) of the ECU in the vehicle 200. Optionally, the vehicle communication interface apparatus 20 may be provided with a Wi-Fi module, a USB module, a Bluetooth module and a mobile network module, and may establish a connection to the host computer 10 according to a requirement.

Based on the foregoing vehicle diagnosis system 100, in actual application, when a diagnosis needs to be performed on the vehicle 200, the user (the vehicle owner or a repair technician) may first connect to the vehicle 200 through the vehicle communication interface apparatus 20, to enable the vehicle communication interface apparatus 20 to read diagnostic data of the vehicle 200; and then establish a connection between the host computer 10 and the vehicle communication interface apparatus 200, to enable the vehicle communication interface apparatus 20 to transmit the diagnostic data to the host computer 10, or to receive a diagnostic command sent by the user through the host computer 10, to perform a diagnosis on the vehicle 200.

It should be noted that the data transmission method in the vehicle communication interface apparatus according to the embodiments of the present invention may be further expanded to another proper implementation environment, and is not limited to the implementation environment shown in FIG. 1. Although FIG. 1 shows only one host computer 10 and one vehicle communication interface apparatus 20, a person skilled in the art should understand that in an actual application process, the application environment may include one or more host computers 10 and more vehicle communication interface apparatuses 20. This is not specifically limited in the embodiments of the present invention

Referring to FIG. 2 together, the vehicle communication interface apparatus 20 includes a first controller 21 and a second controller 22.

The first controller 21 is configured to receive a diagnostic command sent by the host computer 10, and store the diagnostic command into a first queue. The first controller 21 is further configured to obtain diagnostic data from a second queue, and send the diagnostic data to the host computer 10.

The second controller 22 is configured to obtain the diagnostic command from the first queue, and send the diagnostic command to the ECU in the vehicle 200 connected to the vehicle communication interface apparatus 20. The second controller 22 is further configured to receive the diagnostic data from the ECU in the vehicle 200, and store the diagnostic data into the second queue, to make the first controller 21 obtain the diagnostic data from the second queue and send the diagnostic data to the host computer 10.

The first controller 21 or the second controller 22 may further include a processor, an application-specific integrated circuit (ASIC) including a control processing function, a field programmable gate array (FPGA), a single chip microcomputer, and the like. Certainly, in some other embodiments, the vehicle communication interface apparatus 20 may further include other controllers, and two of the controllers may be selected to perform data transmission according to an actual requirement. This is not limited herein.

As shown in FIG. 2, the vehicle communication interface apparatus 20 further includes a memory 23. The memory 23 may include a volatile memory, for example, a random access memory (RAM) such as a static random-access memory (SRAM) or a double data rate synchronous dynamic random access memory (DDR SDRAM); the memory may also include a non-volatile memory, such as a flash memory, a hard disk drive (HDD) or a solid-state drive (SSD), an electrically erasable programmable read only memory (EEPROM); and the memory may further include a combination of the foregoing various memories. The memory may be an independent memory, or may be a memory or a module including a storage function in a chip (for example, a processor chip). The memory may store computer programs (for example, a control program for an image capture apparatus, a vehicle diagnosis program, or a functional module), a computer instruction, an operating system, data, a database, and the like. The memory may store the foregoing content in different areas

In this embodiment, the memory 23 is connected to the first controller 21 and the second controller 22. The first queue and the second queue are disposed in the memory 23, to make the first controller 21 store the diagnostic command into the first queue or obtain the diagnostic data from the second queue, and to make the second controller 22 obtain the diagnostic command from the first queue or store the diagnostic data into the second queue.

It may be understood that, in some other embodiments, two or more memories may be disposed in the vehicle communication interface apparatus 20. The first queue and the second queue are respectively disposed in different memories, and the two memories are respectively connected to the first controller 21 and the second controller 22, to implement data transmission.

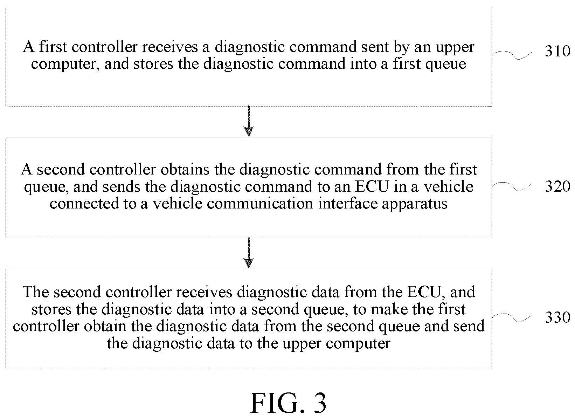

Referring to FIG. 3, FIG. 3 is a schematic flowchart of a data transmission method in a vehicle communication interface apparatus according to an embodiment of the present invention. As shown in FIG. 3, the data transmission method is applied to the vehicle communication interface apparatus 20 in the foregoing embodiment, and the method includes:
S310. A first controller 21 receives a diagnostic command sent by the host computer 10, and stores the diagnostic command into a first queue.

In this embodiment, the "diagnostic command" may include a diagnostic identification command, a verification command, and the like. For example, diagnostic data of a corresponding vehicle module may be obtained through the diagnostic identification command, and whether the host computer 10 includes a diagnostic qualification is verified through the verification command. The host computer 10 may receive or transmit the diagnostic command. For example, the host computer 10 receives a diagnostic command from a user, or the host computer 10 transmits a diagnostic command sent by a terminal. In actual application, when a diagnosis needs to be performed on a vehicle 200, a communication connection to the vehicle 200 may be first established through the vehicle communication interface apparatus 20, and then the user enters a diagnostic command related to the vehicle 200 and the vehicle communication interface apparatus 20 through the host computer 10, and instructs the host computer 10 to send the diagnostic command to the vehicle communication interface apparatus 20, to perform a vehicle diagnosis.

In this embodiment, a specific implementation of receiving the diagnostic command sent by the host computer 10 may be: determining whether the host computer 10 sends the diagnostic command, and if the host computer 10 sends the diagnostic command, receiving the diagnostic command sent by the host computer 10.

In this embodiment, when the first controller 21 receives the diagnostic command sent by the host computer, the first controller 21 stores the diagnostic command into the first queue in the memory 23.

S320. A second controller obtains the diagnostic command from the first queue, and sends the diagnostic command to an ECU in a vehicle connected to a vehicle 200 communication interface apparatus.

In this embodiment, after the first controller 21 stores the diagnostic command into the first queue in the memory 23, the second controller 22 obtains the diagnostic command from the first queue and sends the diagnostic command to the ECU in the vehicle 200 connected to the vehicle communication interface apparatus 20, to make the vehicle 200 receive the diagnostic command sent by the host computer 10.

S330. The second controller 22 receives diagnostic data from the ECU, and stores the diagnostic data into a second queue, to make the first controller 21 obtain the diagnostic data from the second queue and send the diagnostic data to the host computer 10.

In this embodiment, the "diagnostic data" may be diagnostic data of some or all modules of the vehicle 200, and for example, may include current data information and historical data information of a motor module and a battery module. In actual application, the second controller 22 is connected to a bus of the ECU in the vehicle 200, so that the second controller 22 may receive the diagnostic data of the ECU. Optionally, the ECU may upload the diagnostic data regularly according to preset duration, to make the second controller 22 regularly receive the diagnostic data uploaded by the ECU.

In this embodiment, when the second controller 22 receives the diagnostic data, the second controller 22 stores the diagnostic data into the second queue of the memory 23. After the second controller 22 stores the diagnostic data into the second queue, the first controller 21 may obtain the diagnostic data from the second queue, to transmit the diagnostic data to the host computer 10.

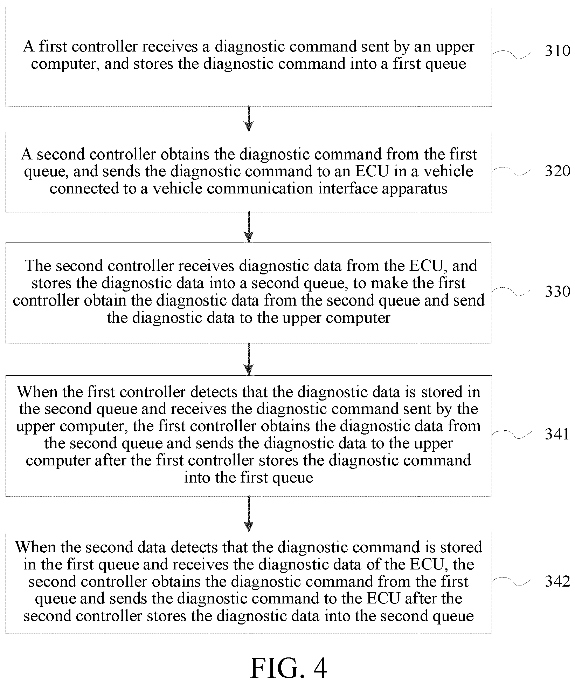

The priorities are preset for processing of the diagnostic data and the diagnostic command. If the priority of the diagnostic command is set to be higher than that of the diagnostic data, the diagnostic command is preferentially processed. In the first controller 21, when the priority of the diagnostic command is preset to be higher than that of the diagnostic data, as shown in FIG. 4, the method further includes:
S341. When the first controller 21 detects that the diagnostic data is stored in the second queue and receives the diagnostic command sent by the host computer 10, the first controller 21 obtains the diagnostic data from the second queue and sends the diagnostic data to the host computer 10 after the first controller 21 stores the diagnostic command into the first queue.

When the host computer 10 sends the diagnostic command to the first controller 21 and the diagnostic data is stored in the second queue of the memory 23, the first controller 21 preferentially responds to the diagnostic command of the host computer 10 and processes the diagnostic command, and then obtains the diagnostic data and sends the diagnostic data to the host computer 10, so that the diagnostic command can be responded to quickly.

In the second controller 22, when the priority of the diagnostic data is preset to be higher than that of the diagnostic command, as shown in FIG. 4, the method further includes:
S342. When the second data detects that the diagnostic command is stored in the first queue and receives the diagnostic data of the ECU, the second controller 22 obtains the diagnostic command from the first queue and sends the diagnostic command to the ECU after the second controller 22 stores the diagnostic data into the second queue.

When the ECU of the vehicle 200 uploads the diagnostic data, and the diagnostic command is stored in the first queue of the memory 23, after the second controller 22 preferentially responds to the diagnostic data of the vehicle 200 and processes the diagnostic data, and then obtains the diagnostic command and sends the diagnostic command to the ECU of the vehicle 200, so that the diagnostic data can be responded to quickly.

It is necessary to be noted that an execution sequence of S310, S320, and S330 may be changed. For example, the execution sequence may be S330, S320, and S310. S341 and S342 may be performed simultaneously or may not be performed simultaneously, or only one of them is selected and performed

In this embodiment, according to the data transmission method, the first controller 21 receives the diagnostic command sent by the host computer 10 and stores the diagnostic command into the first queue, and the second controller 22 obtains the diagnostic command from the first queue and sends the diagnostic command to the vehicle 200. The second controller 22 further receives the diagnostic data from the vehicle 200 and stores the diagnostic data into the second queue, and the first controller 21 further obtains the diagnostic data from the second queue, thereby responding to the diagnostic command and receiving the diagnostic data simultaneously in the vehicle communication interface apparatus 20, to enable the vehicle communication interface apparatus 20 to perform data communication with the host computer 10 and the vehicle 200 simultaneously, to avoid missing the diagnostic data or the diagnostic command.

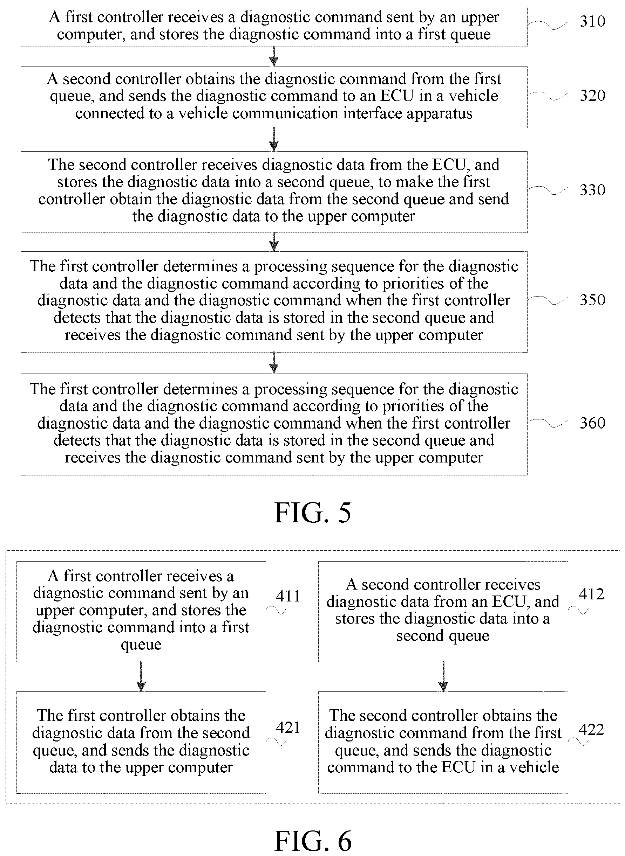

Based on the foregoing embodiment, an embodiment of the present invention further provides another data transmission method in a vehicle communication interface apparatus shown in FIG. 5. Specifically, as shown in FIG. 5, a difference between this embodiment and the foregoing embodiment lies in that:
In this embodiment, the vehicle communication interface apparatus 20 determines the priorities of the diagnostic data and the diagnostic command, to determine a processing sequence for the diagnostic data and the diagnostic command. The data transmission method further includes:

S350. The first controller 21 determines a processing sequence for the diagnostic data and the diagnostic command according to priorities of the diagnostic data and the diagnostic command when the first controller 21 detects that the diagnostic data is stored in the second queue and receives the diagnostic command sent by the host computer 10.

In this embodiment, "priorities of diagnostic data" refer to priorities of a plurality of pieces of diagnostic data stored in the second queue. The priority of the diagnostic data may be determined according to a data size of the diagnostic data and/or storage duration of the diagnostic data in the second queue. For example, a greater data volume of the diagnostic data is preset to have a higher priority. Assuming that the diagnostic data includes diagnostic data A and diagnostic data B, if the data volume of the diagnostic data A is greater than the data volume of the diagnostic data B, it is determined that the priority of the diagnostic data A is higher than that of the diagnostic data B, and the diagnostic data A is preferentially processed. For another example, longer storage duration of the diagnostic data in the second queue is preset to have a higher priority. It is assumed that the diagnostic data includes diagnostic data A and diagnostic data B, the storage duration of the diagnostic data A in the second queue is 1.1s, and the storage duration of the diagnostic data B in the second queue is 1s, so that the storage duration of the diagnostic data A in the second queue is greater than the storage duration of the diagnostic data B in the second queue. Then it is determined that the priority of the diagnostic data A is higher than that of the diagnostic data B, and the diagnostic data A is preferentially processed. For still another example, a greater data volume of the diagnostic data is preset to have a higher priority, longer storage duration of the diagnostic data in the second queue is preset to have a higher priority, and occupied proportions of the data size and the storage duration are respectively 60% and 40%. If the data volume of the diagnostic data A is greater than the data volume of the diagnostic data B, and the storage duration of the diagnostic data A is greater than the storage duration of the diagnostic data B, it is determined that the priority of the diagnostic data A is higher than that of the diagnostic data B.

In this embodiment, "priorities of diagnostic commands" refer to priorities of a plurality of diagnostic commands stored in the first queue. The priority of the diagnostic command may be determined according to urgency and/or importance of the diagnostic command. The "urgency" may be determined according to a sequence in which the diagnostic commands are stored into the first queue. For example, if a diagnostic command C is first stored into the first queue, and a diagnostic command D is then stored into the first queue, the urgency of the diagnostic command C is higher than the urgency of the diagnostic command D, and the priority of the diagnostic command C is higher than the priority of the diagnostic command D. The "importance" may be preset according to the type of the diagnostic command. For example, the importance of a security-class diagnostic command is set to be greater than the importance of a routine-class diagnostic command. The importance of the diagnostic command is preset, and a specific implementation may be: carrying an importance identifier in the diagnostic command. For example, if the diagnostic command C carries a low-level importance identifier, the diagnostic command D carries a high-level importance identifier, the priority of the diagnostic command C is higher than the priority of the diagnostic command D. When the priority of the diagnostic command is jointly determined according to the urgency and the importance of the diagnostic command, preset proportions may be set, and for example, occupied proportions of the urgency and the importance are respectively 60% and 40%, and the priority is determined according to the urgency, the importance, and the occupied proportions of the urgency and the importance.

In S350, the determining, by the first controller 21, a processing sequence for the diagnostic data and the diagnostic command according to priorities of the diagnostic data and the diagnostic command may include:
S3 51. The first controller 21 compares the priority of the diagnostic command with the priority of the diagnostic data according to a preset rule.

S352. The first controller 21 first processes one of the diagnostic command and the diagnostic data of which the priority is higher.

The "preset rule" includes: presetting a correspondence between the priority of the diagnostic command and the priority of the diagnostic data, and converting the priority of one of the diagnostic command and the diagnostic data into the priority of the other one of the diagnostic command and the diagnostic data according to the correspondence. For example, the preset correspondence between the priority of the diagnostic command and the priority of the diagnostic data is that by being multiplied by 0.6, the priority of the diagnostic data is converted into the priority of the diagnostic command. Assuming that the priorities of the diagnostic data A and the diagnostic data B in the diagnostic data are respectively 60% and 40% and the priorities of the diagnostic command C and the diagnostic command D in the diagnostic command are respectively 70% and 30%, the priorities of the diagnostic command C and the diagnostic command D in the diagnostic data are 42% and 18%, and the priorities in descending order are respectively the diagnostic data A, the diagnostic command C, the diagnostic data B, and the diagnostic command D. Certainly, in some other embodiments, the preset correspondence between the priority of the diagnostic command and the priority of the diagnostic data may be another one, and may be set according to an actual use requirement.

In this embodiment, when determining the priority of the diagnostic command and the priority of the diagnostic data, the first controller 21 preferentially processes one of the diagnostic command and the diagnostic data of which the priority is higher according to the priority of the diagnostic command and the priority of the diagnostic data, to enable the diagnostic command or the diagnostic data to be responded to quickly.

In some other embodiments, the data transmission method further includes:
S360. The second controller 22 determines a processing sequence for the diagnostic data and the diagnostic command according to priorities of the diagnostic data and the diagnostic command when the second controller 22 detects that the diagnostic command is stored in the first queue and receives the diagnostic data sent by the ECU.

In S360, the determining, by the second controller 22, a processing sequence for the diagnostic data and the diagnostic command according to priorities of the diagnostic data and the diagnostic command may include:
S361. The second controller 22 compares the priority of the diagnostic command with the priority of the diagnostic data according to a preset rule.

S362. The second controller 22 first processes one of the diagnostic command and the diagnostic data of which the priority is higher.

It is necessary to be noted that the preset rule in the first controller 21 and the preset rule in the second controller 22 may be the same or may be different, and may be determined according to an actual use scenario.

In this embodiment, the vehicle communication interface apparatus 20 determines the priorities of the diagnostic data and the diagnostic command, to determine the processing sequence for the diagnostic data and the diagnostic command. In this way, the vehicle communication interface apparatus 20 responds to the diagnostic command and receive the diagnostic data according to a requirement, so that the vehicle communication interface apparatus 20 performs data communication with the host computer 10 and the vehicle 200, to avoid missing the diagnostic data or the diagnostic command.

Referring to FIG. 6, FIG. 6 is a schematic flowchart of an application example of a data transmission method in a vehicle communication interface apparatus according to an embodiment of the present invention. As shown in FIG. 6,
S411. A first controller 21 receives a diagnostic command sent by an host computer 10, and stores the diagnostic command into a first queue;
S412. A second controller 22 receives diagnostic data from an ECU, and stores the diagnostic data into a second queue;
5421. The first controller 21 obtains the diagnostic data from the second queue, and sends the diagnostic data to the host computer 10.
S422. The second controller 22 obtains the diagnostic command from the first queue, and sends the diagnostic command to the ECU in a vehicle 200.

S411 and S412 may be performed simultaneously or may not be performed simultaneously, and S421 and S422 may be performed simultaneously or may not be performed simultaneously.

In this embodiment, by presetting the priority of the diagnostic command to be higher than the priority of the diagnostic data in the first controller 21 and the priority of the diagnostic data to be higher than the priority of the diagnostic command in the second controller 22, the vehicle communication interface apparatus 20 may perform processing according to the preset priorities of the diagnostic data and the diagnostic command, so that the vehicle communication interface apparatus 20 may perform data communication with the host computer 10 and the vehicle 200 simultaneously, to avoid missing the diagnostic data or the diagnostic command.

The apparatus embodiments described above are merely exemplary, where the units described as separated parts may be or may not be physically separated, and parts displayed as units may be or may not be physical units. That is, the parts may be located in the same place, or may be distributed to a plurality of network units. Some or all of the modules may be selected according to an actual requirement to implement the objective of the solution of this embodiment.

Based on the descriptions of the foregoing implementations, a person skilled in the art should clearly understand that the implementations may be implemented by using software and a hardware platform, or may be implemented by using hardware. A person skilled in the art may understand that all or some of the processes in the method of the foregoing embodiment may be completed by using computer programs in a computer program product to instruct corresponding hardware, and the computer programs may be stored in a non-transient computer-readable storage medium. The computer programs include program instructions, and the program instructions, when being performed by a related device, cause the related device to perform the procedure of the embodiments of the foregoing methods. The storage medium may be a magnetic disk, an optical disc, a read-only memory (ROM) or a random access memory (RAM), or the like.

The product may perform the data transmission method provided in the embodiments of the present invention, and includes corresponding functional modules and beneficial effects for performing the data transmission method. For technical details not described in detail in the embodiments, reference may be made to the data transmission method provided in the embodiments of the present invention.

## Claims

1. A data transmission method for a vehicle communication interface apparatus (20), **characterized in that** the vehicle communication interface apparatus (20) comprises a first controller (21) and a second controller (22), and the method comprises the steps of:
receiving (310), by the first controller (21), a diagnostic command sent by a host computer (10), and storing the diagnostic command into a first queue;
obtaining (320), by the second controller (22), the diagnostic command from the first queue, and sending the diagnostic command to an electronic control unit, ECU, in a vehicle (200) connected to the vehicle communication interface apparatus (20);
receiving (330), by the second controller (22), diagnostic data from the ECU, and storing the diagnostic data into a second queue, obtaining by the first controller (21) the diagnostic data from the second queue and send the diagnostic data to the host computer (10); and
determining (350), by the first controller (21), a processing sequence for the diagnostic data and the diagnostic command according to priorities of the diagnostic data and the diagnostic command when the first controller (21) detects that the diagnostic data is stored in the second queue and receives the diagnostic command sent by the host computer (10), to enable the one of the diagnostic command and the diagnostic data of which priority is higher to be responded to first.

2. The method according to claim 1, wherein
the priority of the diagnostic data is determined according to a data size of the diagnostic data and/or storage duration of the diagnostic data in the second queue; and
the priority of the diagnostic command is determined according to urgency and/or importance of the diagnostic command.

3. The method according to claim 2, wherein the determining (350), by the first controller (21), a processing sequence for the diagnostic data and the diagnostic command according to priorities of the diagnostic data and the diagnostic command comprises:
comparing, by the first controller (21), the priority of the diagnostic command with the priority of the diagnostic data according to a preset rule; and
first processing, by the first controller (21), one of the diagnostic command and the diagnostic data of which the priority is higher, wherein
the preset rule comprises:
presetting a correspondence between the priority of the diagnostic command and the priority of the diagnostic data, and converting the priority of one of the diagnostic command and the diagnostic data into the priority of the other one of the diagnostic command and the diagnostic data according to the correspondence.

4. The method according to claim 1, wherein the method further comprises, when the priority of the diagnostic command is higher than the priority of the diagnostic data:
when the first controller (21) detects that the diagnostic data is stored in the second queue and receives the diagnostic command sent by the host computer (10), obtaining, by the first controller (21), the diagnostic data from the second queue and sending the diagnostic data to the host computer (10) after the first controller (21) stores the diagnostic command into the first queue.

5. A vehicle communication interface apparatus (20), **characterized in that** the vehicle communication interface apparatus (20) comprises a first controller (21) and a second controller (22),
the first controller (21) is configured to receive (310) a diagnostic command sent by a host computer (10), and store the diagnostic command into a first queue;
the second controller (22) is configured to obtain (320) the diagnostic command from the first queue, and send the diagnostic command to an ECU in a vehicle (200) connected to the vehicle communication interface apparatus (20);
the second controller (22) is further configured to receive (330) diagnostic data from the ECU, and store the diagnostic data into a second queue, to make the first controller (21) obtain the diagnostic data from the second queue and send the diagnostic data to the host computer (10); and
the first controller (21) is further configured to determine (350) a processing sequence for the diagnostic data and the diagnostic command according to priorities of the diagnostic data and the diagnostic command when the first controller (21) detects that the diagnostic data is stored in the second queue and receives the diagnostic command sent by the host computer (10), to enable the one of the diagnostic command and the diagnostic data of which priority is higher to be responded to first.

6. The vehicle communication interface apparatus (20) according to claim 5, wherein
the first controller (21) is adapted to determine the priority of the diagnostic data according to a data size of the diagnostic data and/or storage duration of the diagnostic data in the second queue; and
the first controller (21) is adapted to determine the priority of the diagnostic command according to urgency and/or importance of the diagnostic command.

7. The vehicle communication interface apparatus (20) according to claim 6, wherein the first controller (21) is further configured to:
compare the priority of the diagnostic command with the priority of the diagnostic data according to a preset rule; and
first process one of the diagnostic command and the diagnostic data of which the priority is higher, wherein
the preset rule comprises:
presetting a correspondence between the priority of the diagnostic command and the priority of the diagnostic data, and converting the priority of one of the diagnostic command and the diagnostic data into the priority of the other one of the diagnostic command and the diagnostic data according to the correspondence.

8. The vehicle communication interface apparatus (20) according to claim 5 wherein, when the priority of the diagnostic command is higher than the priority of the diagnostic data,
the first controller (21) is further configured to, when the first controller (21) detects that the diagnostic data is stored in the second queue and receives the diagnostic command sent by the host computer (10), obtain the diagnostic data from the second queue and send the diagnostic data to the host computer (10) after the first controller (21) stores the diagnostic command into the first queue.

## Patentansprüche

1. Datenübertragungsverfahren für eine Fahrzeugkommunikations-Schnittstellenvorrichtung (20), **dadurch gekennzeichnet, dass** die Fahrzeugkommunikations-Schnittstellenvorrichtung (20) eine erste Steuerung (21) und eine zweite Steuerung (22) umfasst, und das Verfahren die folgenden Schritte umfasst:
Empfangen (310) eines von einem Host-Computer (10) gesendeten Diagnosebefehls durch die erste Steuerung (21), und Speichern des Diagnosebefehls in einer ersten Warteschlange;
Erhalten (320) des Diagnosebefehls aus der ersten Warteschlange durch die zweite Steuerung (22) und Senden des Diagnosebefehls an eine elektronische Steuereinheit, ECU, in einem Fahrzeug (200), das mit der Fahrzeugkommunikations-Schnittstellenvorrichtung (20) verbunden ist;
Empfangen (330) von Diagnosedaten von der ECU durch die zweite Steuerung (22) und Speichern der Diagnosedaten in einer zweiten Warteschlange, Erhalten der Diagnosedaten aus der zweiten Warteschlange durch die erste Steuerung (21) und Senden der Diagnosedaten an den Host-Computer (10); und
Bestimmen (350), durch die erste Steuerung (21), einer Verarbeitungssequenz für die Diagnosedaten und den Diagnosebefehl gemäß Prioritäten der Diagnosedaten und des Diagnosebefehls, wenn die erste Steuerung (21) erkennt, dass die Diagnosedaten in der zweiten Warteschlange gespeichert sind, und den vom Host-Computer (10) gesendeten Diagnosebefehl empfängt, um zu ermöglichen, dass der/die eine des Diagnosebefehls oder der Diagnosedaten, dessen/deren Priorität höher ist, zuerst beantwortet werden.

2. Verfahren nach Anspruch 1, wobei
die Priorität der Diagnosedaten in Abhängigkeit von einer Datengröße der Diagnosedaten und/oder der Speicherdauer der Diagnosedaten in der zweiten Warteschlange bestimmt wird; und
die Priorität des Diagnosebefehls nach der Dringlichkeit und/oder Wichtigkeit des Diagnosebefehls bestimmt wird.

3. Verfahren nach Anspruch 2, wobei das Bestimmen (350) einer Verarbeitungssequenz für die Diagnosedaten und den Diagnosebefehl durch die erste Steuerung (21) entsprechend den Prioritäten der Diagnosedaten und des Diagnosebefehls umfasst:
Vergleichen der Priorität des Diagnosebefehls mit der Priorität der Diagnosedaten durch die erste Steuerung (21) gemäß einer voreingestellten Regel; und
erstes Verarbeiten von einem der Diagnosebefehls und der Diagnosedaten, dessen/deren Priorität höher ist, durch die erste Steuerung (21), wobei
die voreingestellte Regel umfasst:
Voreinstellen einer Entsprechung zwischen der Priorität des Diagnosebefehls und der Priorität der Diagnosedaten, und Umwandeln der Priorität von einem des Diagnosebefehls und der Diagnosedaten in die Priorität des anderen des Diagnosebefehls und der anderen Diagnosedaten entsprechend der Entsprechung.

4. Verfahren nach Anspruch 1, wobei das Verfahren ferner umfasst, wenn die Priorität des Diagnosebefehls höher ist als die Priorität der Diagnosedaten:
wenn die erste Steuerung (21) erkennt, dass die Diagnosedaten in der zweiten Warteschlange gespeichert sind, und den vom Host-Computer (10) gesendeten Diagnosebefehl empfängt, Erhalten der Diagnosedaten aus der zweiten Warteschlange durch die erste Steuerung (21) und Senden der Diagnosedaten an den Host-Computer (10), nachdem die erste Steuerung (21) den Diagnosebefehl in der ersten Warteschlange gespeichert hat.

5. Fahrzeugkommunikations-Schnittstellenvorrichtung (20), **dadurch gekennzeichnet, dass** die Fahrzeugkommunikations-Schnittstellenvorrichtung (20) eine erste Steuerung (21) und eine zweite Steuerung (22) umfasst,
die erste Steuerung (21) konfiguriert ist, um einen von einem Host-Computer (10) gesendeten Diagnosebefehl zu empfangen (310) und den Diagnosebefehl in einer ersten Warteschlange zu speichern;
die zweite Steuerung (22) konfiguriert ist, um den Diagnosebefehl von der ersten Warteschlange zu erhalten (320) und den Diagnosebefehl an eine ECU in einem Fahrzeug (200) zu senden, das mit der Fahrzeugkommunikations-Schnittstellenvorrichtung (20) verbunden ist;
die zweite Steuerung (22) ferner konfiguriert ist, um Diagnosedaten von der ECU zu empfangen (330) und die Diagnosedaten in einer zweiten Warteschlange zu speichern, um zu bewirken, dass die erste Steuerung (21) die Diagnosedaten aus der zweiten Warteschlange erhält und die Diagnosedaten an den Host-Computer (10) sendet; und
die erste Steuerung (21) ferner konfiguriert ist, um eine Verarbeitungssequenz für die Diagnosedaten und den Diagnosebefehl gemäß Prioritäten der Diagnosedaten und des Diagnosebefehls zu bestimmen (350), wenn die erste Steuerung (21) erkennt, dass die Diagnosedaten in der zweiten Warteschlange gespeichert sind, und den vom Hostcomputer (10) gesendeten Diagnosebefehl empfängt, um zu ermöglichen, dass das eine des Diagnosebefehls und der Diagnosedaten, dessen/deren Priorität höher ist, zuerst beantwortet werden.

6. Fahrzeug-Kommunikationsschnittstellenvorrichtung (20) nach Anspruch 5, wobei
die erste Steuerung (21) angepasst ist, um die Priorität der Diagnosedaten gemäß einer Datengröße der Diagnosedaten und/oder der Speicherdauer der Diagnosedaten in der zweiten Warteschlange zu bestimmen; und
die erste Steuerung (21) angepasst ist, um die Priorität des Diagnosebefehls entsprechend der Dringlichkeit und/oder Wichtigkeit des Diagnosebefehls zu bestimmen.

7. Fahrzeug-Kommunikationsschnittstellenvorrichtung (20) nach Anspruch 6, wobei die erste Steuerung (21) ferner konfiguriert ist, um:
die Priorität des Diagnosebefehls mit der Priorität der Diagnosedaten nach einer vorgegebenen Regel zu vergleichen; und
zuerst eine/n des Diagnosebefehl und der Diagnosedaten zu verarbeiten, dessen/deren Priorität höher ist, wobei
die voreingestellte Regel umfasst:
Voreinstellen einer Entsprechung zwischen der Priorität des Diagnosebefehls und der Priorität der Diagnosedaten, und Umwandeln der Priorität von einem des Diagnosebefehls und der Diagnosedaten in die Priorität des anderen des Diagnosebefehls und der Diagnosedaten entsprechend der Entsprechung.

8. Fahrzeug-Kommunikationsschnittstellenvorrichtung (20) nach Anspruch 5, wobei, wenn die Priorität des Diagnosebefehls höher ist als die Priorität der Diagnosedaten,
die erste Steuerung (21) ferner konfiguriert ist, um, wenn die erste Steuerung (21) erkennt, dass die Diagnosedaten in der zweiten Warteschlange gespeichert sind, und den vom Host-Computer (10) gesendeten Diagnosebefehl empfängt, die Diagnosedaten aus der zweiten Warteschlange zu erhalten und die Diagnosedaten an den Host-Computer (10) zu senden, nachdem die erste Steuerung (21) den Diagnosebefehl in der ersten Warteschlange gespeichert hat.

## Revendications

1. Procédé de transmission de données pour un dispositif d'interface de communication de véhicule (20), **caractérisé en ce que** le dispositif d'interface de communication de véhicule (20) comprend une première commande (21) et une deuxième commande (22), et le procédé comprend les étapes suivantes :
recevoir (310), par la première commande (21), une commande de diagnostic envoyée par un ordinateur hôte (10), et stocker la commande de diagnostic dans une première file d'attente ;
obtenir (320), par la deuxième commande (22), la commande de diagnostic à partir de la première file d'attente, et envoyer la commande de diagnostic à une unité de commande électronique, ECU, dans un véhicule (200) connecté au dispositif d'interface de communication de véhicule (20) ;
recevoir (330), par la deuxième commande (22), les données de diagnostic de l'ECU, et stocker les données de diagnostic dans une deuxième file d'attente, obtenir par la première commande (21) les données de diagnostic de la deuxième file d'attente et envoyer les données de diagnostic à l'ordinateur hôte (10) ; et
déterminer (350), par la première commande (21), une séquence de traitement pour les données de diagnostic et la commande de diagnostic en fonction des priorités des données de diagnostic et de la commande de diagnostic lorsque la première commande (21) détecte que les données de diagnostic sont stockées dans la deuxième file d'attente et reçoit la commande de diagnostic envoyée par l'ordinateur hôte (10), afin de permettre à l'une de la commande de diagnostic et des données de diagnostic dont la priorité est la plus élevée de recevoir la première réponse.

2. Procédé selon la revendication 1, dans lequel
la priorité des données de diagnostic est déterminée en fonction de la taille des données de diagnostic et/ou de la durée de stockage des données de diagnostic dans la deuxième file d'attente ; et
la priorité de la commande de diagnostic est déterminée en fonction de l'urgence et/ou de l'importance de la commande de diagnostic.

3. Procédé selon la revendication 2, dans lequel la détermination (350), par la première commande (21), d'une séquence de traitement des données de diagnostic et de la commande de diagnostic en fonction des priorités des données de diagnostic et de la commande de diagnostic comprend :
comparer, par la première commande (21), la priorité de la commande de diagnostic avec la priorité des données de diagnostic selon une règle prédéfinie ; et
traiter premièrement, par la première commande (21), l'une des commandes de diagnostic et des données de diagnostic dont la priorité est la plus élevée, dans lequel
la règle prédéfinie comprend :
établir une correspondance entre la priorité de la commande de diagnostic et la priorité des données de diagnostic, et convertir la priorité de l'une des commandes de diagnostic et des données de diagnostic en la priorité de l'autre de la commande de diagnostic et des données de diagnostic en fonction de la correspondance.

4. Procédé selon la revendication 1, dans lequel le procédé comprend en outre, lorsque la priorité de la commande de diagnostic est supérieure à la priorité des données de diagnostic :
lorsque la première commande (21) détecte que les données de diagnostic sont stockées dans la deuxième file d'attente et reçoit la commande de diagnostic envoyée par l'ordinateur hôte (10), obtenir, par la première commande (21), les données de diagnostic de la deuxième file d'attente et envoyer les données de diagnostic à l'ordinateur hôte (10) après que la première commande (21) a stocké la commande de diagnostic dans la première file d'attente.

5. Dispositif d'interface de communication de véhicule (20), **caractérisé en ce que** le dispositif d'interface de communication de véhicule (20) comprend une première commande (21) et une deuxième commande (22),
la première commande (21) est configurée pour recevoir (310) une commande de diagnostic envoyée par un ordinateur hôte (10), et stocker la commande de diagnostic dans une première file d'attente ;
la deuxième commande (22) est configurée pour obtenir (320) la commande de diagnostic à partir de la première file d'attente, et envoyer la commande de diagnostic à une ECU dans un véhicule (200) connecté au dispositif d'interface de communication de véhicule (20) ;
la deuxième commande (22) est en outre configurée pour recevoir (330) des données de diagnostic de l'ECU, et stocker les données de diagnostic dans une deuxième file d'attente, pour que la première commande (21) obtienne les données de diagnostic de la deuxième file d'attente et envoie les données de diagnostic à l'ordinateur hôte (10) ; et
la première commande (21) est en outre configuré pour déterminer (350) une séquence de traitement pour les données de diagnostic et la commande de diagnostic en fonction des priorités des données de diagnostic et de la commande de diagnostic lorsque la première commande (21) détecte que les données de diagnostic sont stockées dans la deuxième file d'attente et reçoit la commande de diagnostic envoyée par l'ordinateur hôte (10), afin de permettre à l'une de la commande de diagnostic et des données de diagnostic dont la priorité est la plus élevée de recevoir la première réponse.

6. Dispositif d'interface de communication de véhicule (20) selon la revendication 5, dans lequel
la première commande (21) est adaptée pour commander la priorité des données de diagnostic en fonction de la taille des données de diagnostic et/ou de la durée de stockage des données de diagnostic dans la deuxième file d'attente ; et
la première commande (21) est adaptée pour commander la priorité de la commande de diagnostic en fonction de l'urgence et/ou de l'importance de la commande de diagnostic.

7. Dispositif d'interface de communication de véhicule (20) selon la revendication 6, dans lequel la première commande (21) est en outre configurée pour :
comparer la priorité de la commande de diagnostic avec la priorité des données de diagnostic selon une règle prédéfinie ; et
traiter premièrement l'une des commandes de diagnostic et des données de diagnostic dont la priorité est la plus élevée, dans lequel
la règle prédéfinie comprend :
établir une correspondance entre la priorité de la commande de diagnostic et la priorité des données de diagnostic, et convertir la priorité de l'une des commandes de diagnostic et des données de diagnostic en priorité de l'autre de la commande de diagnostic et des données de diagnostic en fonction de la correspondance.

8. Dispositif d'interface de communication de véhicule (20) selon la revendication 5 dans lequel, lorsque la priorité de la commande de diagnostic est supérieure à la priorité des données de diagnostic,
la première commande (21) est en outre configurée pour, lorsque la première commande (21) détecte que les données de diagnostic sont stockées dans la deuxième file d'attente et reçoit la commande de diagnostic envoyée par l'ordinateur hôte (10), obtenir les données de diagnostic de la deuxième file d'attente et envoyer les données de diagnostic à l'ordinateur hôte (10) après que la première commande (21) a stocké la commande de diagnostic dans la première file d'attente.
